(19) Europäisches Patentamt
European Patent Office
Office européen des brevets

(11) EP 2 374 524 B1

(12) # EUROPEAN PATENT SPECIFICATION

(45) Date of publication and mention of the grant of the patent:
**03.04.2013 Bulletin 2013/14**

(51) Int Cl.:
***B01D 53/86*** *(2006.01)* ***F23J 15/02*** *(2006.01)*
***F23J 15/00*** *(2006.01)* ***F23J 15/04*** *(2006.01)*

(21) Application number: **11161277.6**

(22) Date of filing: **06.04.2011**

(54) **System used in cinerator for reducing NOx**

In einem Verbrennungsofen für Krematorien verwendetes System zur NOx-Reduktion

Système utilisé dans un four crématoire afin de réduire les NOx

(84) Designated Contracting States:
**DE GB NL**

(30) Priority: **07.04.2010 JP 2010088536**

(43) Date of publication of application:
**12.10.2011 Bulletin 2011/41**

(73) Proprietor: **Taiyo Chikuro Industries Co., Ltd.**
**Fukuoka Fukuoka 8120045 (JP)**

(72) Inventor: **Eguchi, Shoji**
**Fukuoka 8120045 (JP)**

(74) Representative: **Winter, Brandl, Fürniss, Hübner, Röss, Kaiser, Polte - Partnerschaft**
**Alois-Steinecker-Straße 22**
**85354 Freising (DE)**

(56) References cited:
**KR-B1- 100 914 476**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 374 524 B1

## Description

The present invention relates to a system for reducing nitrogen oxide (NOx) contained in exhaust gases exhausted from a cinerator in accordance with the preamble of claim 1.

## DESCRIPTION OF THE RELATED ART

As a method of removing nitrogen oxide (NOx) contained in exhaust gas from incineration systems, there is well used a method of atomizing ammonia ($NH_3$) into exhaust gas and allowing ammonia to pass through a catalyst layer area to thereby decompose NOx into nitrogen (N) and water ($H_2O$).

The NOx removal reaction by which nitrogen is removed from NOx contained in exhaust gas is expressed in the following reaction formulae (1) and (2).

$$4NO + 4NH_3 + O_2 \rightarrow 4N_2 + 6H_2O \quad (1)$$

$$2NO_2 + 4NH_3 + O_2 \rightarrow 3N_2 + 6H_2O \quad (2)$$

Because most of NOx contained in exhaust gas is NO, a mol ratio between NO and $NH_3$ is 1:1 in accordance with the reaction formula (1). Hence, a mol amount of ammonia necessary for the reaction is almost equal to a mol amount of NOx.

The system, to be used in an environmental apparatus, for removing nitrogen oxide contained in exhaust gas by virtue of catalyst and ammonia has been developed mainly for treating exhaust gas exhausted out of a large-scale dust cinerator, and hence, is designed on the assumption that it is used under the condition of stable and continuous incineration exhausting a large amount of exhaust gas.

In contrast, if the above-mentioned system for removing nitrogen oxide were used in a batch type furace such as a cinerator (that is, a furnace used in a crematory) which exhausts a small amount of exhaust gas with high fluctuation in an amout of exhaust gas, there occurred problems as follows.

Firstly, it is difficult to raise a temperature of catalyst up to a temperature at which the catalyst is able to react with ammonia.

Secondly, since an amount of ammonia is small, it is difficult to uniformly introduce exhaust gas into catalyst, after ammonia was atomized into exhaust gas. Thus, there is generated irregularity in a density profile of ammonia to be introduced into catalyst, resulting in that ammonia which remains not reacted with exhaust gas is likely to be leaked.

Thirdly, an amount of exhaust gas to be treated is small, but there is high fluctuation with respect to an amount of exhaust gas among objects to be burnt to ashes, resulting in that it is difficult to exactly control an amount of atomized ammonia. Hence, the problem of ammonia leakage derived from non-reacted ammonia is not avoidable in a method in which a uniform amount of ammonia is atomized or an amount of atomized ammonia is controled by means of a timer.

In order to the above-mentioned problem, Japanese Patent Application Publication No. 2001-17045 has suggested an apparatus for treating exhaust gas, including nitrogen-removal catalyst layers in both a first stage and a second stage for treating exhaust gas, exhausted out of a cinerator, containing nitrogen oxide as well as odor and/or dioxine. In the suggested apparatus, ammonia is introduced thereinto for treating exhaust gas, and nitrogen oxide is reduced by means of the nitrogen-removal catalyst layer arranged in the first stage. Thereafter, nitrogen oxide having remained non-reacted is reduced with ammonia having remained non-reacted, in the nitrogen-removal catalyst layer arranged in the second stage, and simultaneously, odor and dioxine both contained in the exhaust gas are removed by means of the nitrogen-removal catalyst layer arranged in the first and/or second stage.

Ammonia is known as malodorous substance, and it is necessary to establish a technique for minimizing leakage of ammonia also in a cinerator in order to meet the emissioin standard of malodorous substance.

The apparatus suggested in the above-mentioned Publication is designed to include the catalyst layers arranged in two stages, that is, the nitrogen-removal catalyst layer arranged in the first stage and the nitrogen-removal catalyst layer arranged in the second stage, in order to enhance an efficiency with which NOx is removed, and control an amount of ammonia. This is because a nitrogen-removal catalyst layer arranged only in one stage is not able to enhance an efficiency with which NOx is removed, resulting in that the apparatus unavoidably has a complex structure.

## SUMMARY OF THE INVENTION

In view of the above-mentioned problem in the conventional apparatus, it is the problem underlying the present invention to provide a system to be used in a cinerator for reducing nitrogen oxide.

This problem is solved by a system in accordance with claim 1.

In particular, the system is capable of uniformly introducing atomized ammonia into a catalyst layer area, raising a temperature of a catalyst as soon as possible after starting an operation of a cinerator, and controlling an amount of atomized ammonia in accordance with fluctuation in both an amount of exhaust gas and an amount of NOx.

In one aspect of the present invention, there is provided a system to be used in a cinerator for reducing nitrogen oxide, wherein a cylindrical catalyst-reaction tower having both an inlet through which exhaust gas exhausted out of the cinerator is introduced therein, and an outlet through which exhaust gas is exhausted out thereof, the catalyst-reaction tower being divided inside thereof into a mixture-dispersion area situated close to the inlet, and a catalyst layer area situated close to the outlet, a nozzle unit through which aqueous ammonia is atomized into the catalyst-reaction tower, the nozzle unit being situated in the mixture-dispersion area in the vicinity of the inlet, at least two area-contractors arranged in the mixture-dispersion area, and spaced away from each other by a predetermined distance axially of the catalyst-reaction tower, each of the area-contractors having at least one opening, the opeing of one of the area-contractors being located in no coincidence with the opening of the other area-contractor axially of the catalyst-reaction tower, and a catalyst included in the catalyst layer area for facilitating reaction of the aqueous ammonia with nitrogen oxide contained in the exhaust gas.

In the system in accordance with the present invention, at least two area-contractors are arranged in the mixture-dispersion area. Each of the area-contractors is designed to have at least one opeing, and the opening of one of the area-contractors is located in no coincidence with the opening of the other area-contractor axially of the catalyst-reaction tower. The area-contractors facilitate mixing of exhaust gas with aqueous ammonia sprayed through the nozzle unit, resulting in that nitrogen-removal reaction is facilitated by means of the catalyst included in the catalyst layer area.

It a preferred embodiment, the system is designed to further include a duct through which heated gas is introduced into the mixture-dispersion area, the duct being situated between the inlet and the area-contractor situated closer to the inlet.

In the embodiment, the duct is arranged between the inlet and the area-contractor situated closer to the inlet, and a gas heated for raising a temperature of the catalyst is introduced into the catalyst-reaction tower. This embodiment makes it possible to early raise a temperature of the catalyst up to a predetermined temperature, resulting in that nitrogen-removal reaction can be facilitated by means of the catalyst immediately after starting cremation.

In another preferred embodiment, the nozzle unit includes two nozzles each introducing compressed air and aqueous ammonia into the catalyst-reaction tower, the aqueous ammonia being supplied to the nozzle from a quantiative pump which can control a quantity of flow of the aqueous ammonia.

In the embodiment, since a ratio at which compressed air and aqueous ammonia is mixed with each other can be controlled, it is possible to exactly and swiftly control an amount of atomized ammonia by means of a computer.

In another preferred embodiment, the system is designed to further include a flow-quantity meter for measuring a flow quantity of the exhaust gas exhausted out of the catalyst-reaction tower, a nitrogen oxide meter for measuring a density of nitrogen oxide contained in the exhaust gas, and a controller for controlling a flow quantity of the aqueous ammonia in accordance with both a difference between a target density and the nitrogen oxide density measured by the nitrogen oxide meter, and a flow quantity of the exhaust gas measured by the flow-quantity meter.

In the embodiment, a NOx density in exhaust gas is kept monitored, and nitrogen-removal reaction is facilitated under real-time control to an amount of aqueous ammonia in such a way that the monitored density becomes equal to a target density, resulting in that it is possible to accurately control a NOx density and an ammonia density in exhaust gas.

In another preferred embodiment, each of the area-contractors is designed to have a plurality of circular openings situated around a center of the catalyst-reaction tower and spaced away equally from one another, each of the circular opeings of one of the area-contractors being located in no coincidence axially of the catalyst-reaction tower with each of the circular openings of the area-contractor located adjacent thereto.

In accordance with the above-mentioned present invention, there can be obtained advantages that it is possible to uniformly introduce atomized ammonia into a catalyst layer area, raise a temperature of a catalyst as soon as possible after starting an operation of a cinerator, and control an amount of atomized ammonia in accordance with fluctuation in both an amount of exhaust gas and an amount of NOx.

The above and other objects and advantageous features of the present invention will be made apparent from the following description made with reference to the accompanying drawings, in which like reference characters designate the same or similar parts throughout the drawings.

## BRIEF DESCRIPTION OF THE DRAWINGS

FIG. 1 (a) is a cross-sectional view of a catalyst-reaction tower, which is a part of the system in accordance with a preferred embodiment of the present invention, FIG. 1 (b) is a cross-sectional view taken along the line A-A’ in FIG. 1 (a), FIG. 1 (c) is a cross-sectional view taken along the line B-B’ in FIG. 1 (a), and FIG. 1 (d) is a cross-sectional view taken along the line C-C’ in FIG. 1 (a).

FIG. 2 is a block diagram of the system in accordance with a preferred embodiment of the present invention.

FIG. 3 illustrates a gas flow which changes in dependence on whether dampers are open or closed, while the catalyst-reaction tower is being pre-heated in the system in accordance with a preferred embodiment of the present invention.

FIG. 4 illustrates a gas flow which changes in dependence on whether dampers are open or closed, while the system in accordance with a preferred embodiment of the present invention is ordinarily operated.

FIG. 5 illustrates a gas flow, which changes in dependence on whether dampers are open or closed, observed when a temperature at an inlet of the bag filter is equal to or greater than 210 degrees centigrade in the system in accordance with a preferred embodiment of the present invention.

FIG. 6 illustrates a gas flow, which changes in dependence on whether dampers are open or closed, observed in natural ventilation in the system in accordance with a preferred embodiment of the present invention.

FIG. 7 is a flow-chart showing steps to be carried out in the control to an amount of atomized aqueous ammonia in the system in accordance with a preferred embodiment of the present invention.

FIG. 8 is a graph showing a relation among an amount of atomized aqueous ammonia, a NOx density, an $O_2$ density, and temperatures of predetermined positions.

## DESCRIPTION OF THE PREFERRED EMBODIMENTS

A preferred embodiment in accordance with the present invention will be explained hereinbelow with reference to drawings.

As illustrated in FIG. 1(a), the system for reducing nitrogen oxide, in accordance with the embodiment of the present invention includes a cylindrical catalyst-reaction tower 1, a nozzle unit 2, a first area-contractor 21, a second area-contractor 22, and a catalyst 23.

The catalyst-reaction tower 1 is designed to be cylindrical, because a cylinder has a small dead space.

The catalyst-reaction tower 1 has an inlet 1 A through which exhaust gas exhausted out of a cinerator (not illustrated) is introduced therein, and an outlet 1 B through which exhaust gas is exhausted out thereof.

As illustrated in FIG. 1(a), the catalyst-reaction tower 1 is divided inside thereof into a mixture-dispersion area 1C situated close to the inlet 1A, and a catalyst layer area 1D situated close to the outlet 1 B. In other words, the mixture-dispersion area 1C is situated upstream of the catalyst layer area 1 D in a direction in which exhaust gas flows. Atomized ammonia and exhaust gas are mixed with each other in the mixture-dispersion area 1C. The catalyst layer area 1 D is filled with the catalyst 23, as illustrated in FIG. 1 (d).

Two area-contractors, that is, the first area-contractor 21 and the second area-contractor 22 are arranged in the mixture-dispersion area 1C. The first area-contractor 21 and the second area-contractor 22 are spaced away from each other by a predetermined distance in an axial direction of the catalyst-reaction tower 1.

As illustrated in FIG. 1 (b), the first area-contractor 21 is designed to have three circular openings 21 a formed therethrough. The three openings 21 a are situated around a centeral axis of the catalyst-reaction tower 1, and are spaced away equally from one another, specifically, by 120 degrees in an angle of circumference. As illustrated in FIG. 1 (c), the second area-contractor 22 is designed to have three circular openings 22a formed therethrough. Similarly to the openings 21 a, the three openings 22a are situated around a centeral axis of the catalyst-reaction tower 1, and are spaced away equally from one another, specifically, by 120 degrees in an angle of circumference.

As is understood in FIGS. 1 (b) and 1 (c), the openings 21 a of the first area-contractor 21 are located in no coincidence in an axial direction of the catalyst-reaction tower 1 with the openings 22a of the second area-contractor 22. Specifically, each of the openings 21 a is located in angular deviation of 60 degrees relative to each of the openings 22a.

The nozzle unit 2 is situated at a center of the inlet 1 A of the catalyst-reaction tower 1. Aqueous ammonia is atomized into the catalyst-reaction tower 1 through the nozzle unit 2, and is vaporized instantaneously when it makes contact with exhaust gas. During passing through the first area-contractor 21 and the second area-contractor 22 having the openings 22a situated in no coincidence with the openings 21 a of the first area-contractor 21, the exhaust gas and the ammonia are mixed into gas containing ammonia at a uniform density, which is then introduced into the catalyst layer area 1 D filled with the catalyst 23. Thus, the ammonia almost totally reacts with nitrogen oxide, resulting in that the ammonia and the nitrogen oxide are decomposed into nitrogen gas and water in accordance with the above-mentioned reaction formulae (1) and (2).

The catalyst-reaction tower 1 is designed to have a duct 24 through which a heated gas is introduced into the mixture-dispersion area 1C in order to early raise a temperature of the catalyst 23. In general, a catalyst is heated by virtue of exhaust gas exhausted from a re-combustion furnace when the re-combustion furnace is heated, however, it takes a couple of minutes after starting cremation until the catalyst reaches a temperature at which the catalyst is able to make reaction. In the present embodiment, there is prepared a furnace (not illustrated) for generating heated winds, and heated gas generated in the furnace is introduced into the mixture-dispersion area 1C through the duct 24 for heating the catalyst 23 up to a predetermined temperature. This ensures that the catalyst 23 is kept at a temperature at which the catalyst 23 is workable, immediately after starting cremation.

In actual operation, it was possible to atomize aqueous ammonia by driving the above-mentioned furnace for generating heated winds by ten minutes or shorter after first cremation had started, and it was possible to atomize aqueous ammonia by driving the furnace by five minutes or shorter after second or later cremation in the same day.

The catalyst-reaction tower 1 and the duct 24 are composed of stainless steel (SUS 304) in order to avoid corrosion thereof caused by dew consendation and enhance durability thereof.

As the catalyst 23, there was used honeycomb type low-temperature catalyst commercially available from Kabushiki Kaisha Nippon Shokubai Co., Ltd. under the tradename of "HD-501H". This catalyst is characterized in being capable of removing nitrogen at a high efficiency even at a low temperature, and having a long lifetime. This catalyst includes titanium dioxide as carriers, and vanadium oxide as catalytic components, in which case, the catalyst can be used at 170 degrees centigrade.

FIG. 2 is a block diagram of the system in accordance with the present embodiment.

Exhaust gas exhausted out of a subsidiary combustion chamber (not illustrated) of a cinerator is introduced into a bag filter 4 through a dust collector bypass damper 3. The bag filter 4 removes powder dust out of exhaust gas. When the dust collector bypass damper 3 is closed, exhaust gas bypasses the bag filter 4, and hence, is introduced to both the duct 24 situated in the vicinity of the inlet 1 A of the catalyst-reaction tower 1 and an inlet of a catalyst-reaction tower bypass damper 7. Between the bag filter 4 and the catalyst-reaction tower 1 is situated the nozzle unit 2 (see FIG. 1 (a)) through which aqueous ammonia is atomized into the catalyst-reaction tower 1.

Exhaust gas exhausted out of the catalyst-reaction tower 1 is sucked by an exhauster 5, and is exhausted into atmosphere through an exhaust tower 6. The catalyst-reaction tower 1 is equipped with a catalyst-reaction tower bypass damper 7, and the exhauster 5 is equipped with an exhauster bypass damper 8. The catalyst-reaction tower 1 and the catalyst-reaction tower bypass damper 7 cooperate with each other to control a passage of exhaust gas, and similarly, the exhauster 5 and the exhauster bypass damper 8 cooperate with each other to control a passage of exhaust gas.

The nozzle unit 2 is designed to include two fluid nozzles through which compressed air and aqueous ammonia are introduced into the catalyst-reaction tower 1, respectively, in order to ensure uniform and minute aqueous ammonia particulates. Aqueous ammonia is supplied to the nozzle unit by means of a digital quantative pump 11. An amount of atomized aqueous ammonia is controlled by using a control computer 9 to control an amount of aqueous ammonia passing through the digital quantative pump 11.

The bag filter 4 is equipped at an outlet thereof with a NOx meter 10, which measures a density Nin of NOx contained in exhaust gas to be introduced into the catalyst-reaction tower 1. The catalyst layer area 1D is equipped at an inlet and an outlet thereof with temperature meters 12 and 13, respectively, for measuring a temperature Tin at the inlet and a temperature Tout (both see FIG. 1 (a)) at the outlet. Furthermore, the catalyst-reaction tower 1 is equipped at the outlet 1 B thereof with both a NOx meter 14 for measuring a density Nout of NOx contained in exhaust gas having passed through the catalyst-reaction tower 1, and a flow meter 15 for measuring an amount $Q_N$ of exhaust gas.

The above-mentioned dust collector bypass damper 3, the catalyst-reaction tower bypass damper 7, and the exhauster bypass damper 8 are open or closed in accordance with Table 1 in dependence on the operation of the system.

[Table 1]

| Operation | Dust collector bypass damper 3 | Catalyst-reaction tower bypass damper 7 | Exhauster bypass damper 8 |
|---|---|---|---|
| A | Bypass | Closed | Closed |
| B | Catalyst-reaction tower | Closed | Closed |
| C | Bypass | Open | Closed |
| D | Bypass | Open | Open |

Operation "A" indicates a case where the catalyst-reaction tower 1 is being pre-headed.

Operation "B" indicates a case where the system is ordinarily operated.

Operation "C" indicates a case where a temperature at an inlet of the bag filter 4 is equal to or greater than 120 degrees centigrade.

Operation "D" indicates a case of natural ventilation.

In Table 1, "Bypass" indicates a case where exhaust gas is introduced to the catalyst-reaction tower 1, bypassing the bas filter 4, and "Catalyst-reaction tower" indicates a case where exhaust gas is introduced to the catalyst-reaction tower 1 through the bag filter 4.

As shown in Table 1, while the catalyst-reaction tower 1 is being pre-headed, the dust collector bypass damper 3 is set such that exhaust gas bypasses the bag filter 4, the catalyst-reaction tower bypass damper 7 is closed, and the exhauster bypass damper 8 is closed, to thereby heat the catalyst 23 up to a temperature at which the catalyst 23 can work, by virtue of heat which exhaust gas has while a cinerator is being pre-heated. A gas flow path in this case is shown in FIG. 3 with a thick solid line. If it is desired to early heat the catalyst-reaction tower 1, there may be used a furnace for generating heated winds.

When the system is ordinarily operated, the dust collector bypass damper 3 is set such that exhaust gas is introduced into the catalyst-reaction tower 1 through the bag filter 4, the catalyst-reaction tower bypass damper 7 is closed, and the exhauster bypass damper 8 is closed, to thereby introduce exhaust gas exhausted out of a cinerator into the bag filter 4 for removing dust out of exhaust gas, and further into the catalyst-reaction tower 1. In this case, aqueous ammonia is sprayed in atomized condition through the nozzle unit 2 together with compressed air to thereby faciliate the catalyst 23 to make nitrogen-removal reaction for decomposing nitrogen oxide into nitrogen gas and water. A gas flow path in this case is shown in FIG. 4 with a thick solid line.

If a temperature at an inlet of the bag filter 4 were over 400 degrees centigrade, there might occur a problem that the bag filter 4 is damaged. Hence, exhaust gas is bypassed to carry out madatory ventilation by setting the dust collector bypass damper 3 such that exhaust gas bypasses the bag filter 4, opening the catalyst-reaction tower bypass damper 7, and closing the exhauster bypass damper 8. A gas flow path in this case is shown in FIG. 5 with a thick solid line.

In natural ventilation which is realized, for instance, when the exhauster 5 is out of order, in order to protect all of the parts, the dust collector bypass damper 3 is set such that exhaust gas bypasses the bag filter 4, the catalyst-reaction tower bypass damper 7 is open, and the exhauster bypass damper 8 is open, to thereby carry out natural ventilation by means of bypass ducts. A gas flow path in this case is shown in FIG. 6 with a thick solid line.

Hereinbelow is explained a method of controlling an amount of atomized aqueous ammonia in the present embodiment.

In the present embodiment, the following steps are carried out to calculate an amount of atomized 10% aqueous ammonia, and control the amount.

(A) An amount of $Q_N$ of exhaust gas is calculated based on data collected by the flow meter 15.

(B) A target NOx density ($O_2$ 12% equivalent density) is determined, and a nitrogen removal rate NRR is calculated in accordance with the equation (3).

$$NRR = (X - Y)/X \qquad (3)$$

X: NOx density ($O_2$ 12% equivalent density)
Y: Target NOx density ($O_2$ 12% equivalent density)

Herein, as NOx density, there is used a $O_2$ 12% equivalent density of NOx density Nout having been measured by the NOx meter 14.

(C) An amount $VNH_3$ of atomized 10% aqueous ammonia is calculated in accordance with the equation (4).

$$VNH_3\ (L/hr) = Q_N \times \text{NOx density (actually measured density)} \times 10^{-6} \times NRR \times (NH_3/NO)\ \text{mol ratio} \times (17/22.4) \times (100/10) \times (1/\rho) \qquad (4)$$

$$(NH_3/NO)\ \text{mol ratio} = NRR/100$$

p: Specific gravity of 10% aqueous ammonia

The calculation in accordance with the equation (4) is carried out ten times a second by means of the control computer 9. An instruction is given to the digital quantative pump 11 in accordance with the calculation result to thereby control an amount of atomized aqueous ammonia at realtime.

A method of controlling an amount of atomized aqueous ammonia is explained hereinbelow with reference to the flowchart shown in FIG. 7.

In FIG. 7, whether a temperature Tin at an inlet of the catalyst layer area 1D or the catalyst 23 is equal to or greater than 150 degrees centigrade is judged in accordance with a temperature measured by the temperature meter 12 in step S100.

If the temperature Tin is smaller than 150 degrees centigrade (NO in step S100), the temperature Tin is kept monitored, that is, step S100 is repeatedly carried out.

If the temperature Tin is equal to or greater than 150 degrees centigrade (YES in step S100), the digital quantative pump 11 is turned on in step S110.

After the digital quantative pump 11 was turned on, or when the digital quantative pump 11 has been already turned on, it is judged in step S130 whether the NOx density Nin of exhaust gas to be introduced into the catalyst-reaction tower 1 is equal to or greater than the target NOx density Nta.

If the NOx density Nin is smaller than the target NOx density Nta (NO in step S130), the digital quantative pump 11 is turned on in step S120, and then, the temperature Tin is kept monitored, that is, step S100 is repeatedly carried out.

If the NOx density Nin is equal to or greater than the target NOx density Nta (YES in step S130), an amount of atomized aqueous ammonia is calculated in accordance with the equation (4) in step S140.

An amount of atomized aqueous ammonia is controlled in the digital quantative pump 11 in step S150.

It is judged in step S160 whether the NOx density Nout at the outlet 1 B of the catalyst-reaction tower 1, measured by the NOx meter 14 is equal to or greater than a NOx density lower limit NLL, which is in the range of 0 to about 10 ppm, whether the nitrogen removal rate NRR calculated in accordance with the above-mentioned equation (3) is equal to or greater than 0.1, and whether the temperature Tin at an inlet of the catalyst layer area 1 D is equal to or greater than 140 degrees centigrade.

If the NOx density Nout is equal to or greater than a NOx density lower limit NLL, the nitrogen removal rate NRR is equal to or greater than 0.1, or the temperature Tin is equal to or greater than 140 degrees centigrade (YES in step S160), the temperature Tin is kept monitored, that is, step S100 is repeatedly carried out.

If the NOx density Nout is smaller than a NOx density lower limit NLL, the nitrogen removal rate NRR is smaller than 0.1, and the temperature Tin is smaller than 140 degrees centigrade (NO in step S160), the digital quantative pump 11 is turned on in step S120, and then, the temperature Tin is kept monitored, that is, step S100 is repeatedly carried out.

An amount of atomized aqueous ammonia is controlled in the above-mentioned way to thereby suitably control a NOx density and an ammonia density contained in exhaust gas.

Table 2 shows the measurement results of particular malodorous substances, odor index, odor density at an outlet of the exhaust tower 6. In Table 2, particular malodorous substances have a unit of "ppm (vol/vol)", both odor index and odor density have no unit, and "<" indicates "being smaller than".

[Table 2]

| | P1 | P2 | P3 | P4 | P5 | ST |
|---|---|---|---|---|---|---|
| Ammonia | <0.6 | <0.6 | <0.6 | <0.6 | <0.6 | 1 |
| Methyl Mercaptan | <0.0007 | <0.0007 | <0.0007 | <0.0007 | <0.0007 | 0.002 |
| Hydrogen Sulfide | <0.006 | <0.006 | <0.006 | <0.006 | <0.006 | 0.02 |
| Methyl Sulfide | <0.002 | <0.002 | <0.002 | <0.002 | <0.002 | 0.01 |
| Methyl Disulfide | <0.003 | <0.003 | <0.003 | <0.003 | <0.003 | 0.009 |
| Trimethylamine | <0.001 | <0.001 | <0.001 | <0.001 | <0.001 | 0.005 |
| Acetaldehyde | <0.01 | <0.01 | <0.01 | <0.01 | <0.01 | 0.05 |
| Propionaldehyde | <0.02 | <0.02 | <0.02 | <0.02 | <0.02 | 0.05 |
| Normal Butylaldehyde | <0.003 | <0.003 | <0.003 | <0.003 | <0.003 | 0.009 |
| Isobutyraldehyde | <0.008 | <0.008 | <0.008 | <0.008 | <0.008 | 0.02 |
| Normal Valeraldehyde | <0.004 | <0.004 | <0.004 | <0.004 | <0.004 | 0.009 |
| Isovaleraldehyde | <0.001 | <0.001 | <0.001 | <0.001 | <0.001 | 0.003 |
| Isobutanol | <0.2 | <0.2 | <0.2 | <0.2 | <0.2 | 0.9 |
| Methyl Acetate | <1 | <1 | <1 | <1 | <1 | 3 |
| Methyly Isobutyl Ketone | <0.7 | <0.7 | <0.7 | <0.7 | <0.7 | 1 |
| Toluene | <5 | <5 | <5 | <5 | <5 | 10 |
| Styrene | <0.2 | <0.2 | <0.2 | <0.2 | <0.2 | 0.4 |
| Xylene | <0.5 | <0.5 | <0.5 | <0.5 | <0.5 | 1 |

(continued)

| | P1 | P2 | P3 | P4 | P5 | ST |
|---|---|---|---|---|---|---|
| Propionic Acid | <0.01 | <0.01 | <0.01 | <0.01 | <0.01 | 0.03 |
| Normal Butyric Acid | <0.0004 | <0.0004 | <0.0004 | <0.0004 | <0.0004 | 0.001 |
| Normal Valerianic Acid | <0.0005 | <0.0005 | <0.0005 | <0.0005 | <0.0005 | 0.0009 |
| Isovalerianic Acid | <0.0004 | <0.0004 | <0.0004 | <0.0004 | <0.0004 | 0.001 |
| Odor Index | 24 | 24 | 17 | 22 | 17 | --- |
| Odor Density | 250 | 100 | 50 | 160 | 50 | 500 |
| P1: Outlet of an exhaust tower for a first furnace<br>P2: Outlet of an exhaust tower for a second furnace<br>P3: Outlet of an exhaust tower for a third furnace<br>P4: Outlet of an exhaust tower for a fourth furnace<br>P5: Outlet of an exhaust tower for an animal furnace<br>ST: Emission standard for an outlet of an exhaust tower | | | | | | |

As is obvious in view of the measurement results shown in Table 2, it was confirmed that particular malodorous substances, odor index, and odor density at each of the outlets of the exhaust tower for the furnaces were below the emission standards. In particular, the ammonia density is smaller than the emission standard, 1 ppm, verifying that the ammonia density control to aqueous ammonia used for nitrogen removal was suitable carried out.

FIG. 8 is a graph showing a relation among an amount of atomized aqueous ammonia, a NOx density, an $O_2$ density, and temperatures of predetermined positions in the actual system.

The sign "★" indicates a time at which the atmoization of aqueous ammonia starts. As is obvious in FIG. 8, a temperature at the inlet 1A of the catalyst-reaction tower 1 is kept in the range of 180 to 200 degrees centigrade by mean of the system for reducing nitrogen oxide in a cinerator, in accordance with the embodiment.

For instance, the system in accordance with the above-mentioned embodiment is designed to include two area-contractors, that is, the first area-contractor 21 and the second area-contractor 22. Those skilled in the art can easily understand that the system may be designed to include three or more area-contractors arranged in an axial direction of the catalyst-reaction tower 1.

In the system in accordance with the above-mentioned embodiment, each of the first area-contractor 21 and the second area-contractor 22 is designed to include the three openings 21 a and 22a, respectively. The first area-contractor 21 and the second area-contractor 22 may be designed to include openings in any number, if the number is equal to or greater than 1 (one).

In the system in accordance with the above-mentioned embodiment, the openings 21 a and 22a are designed to be circular. However, it is not always necessary for the openings 21 a and 22a to be circular. The openings 21 a and 22a may be designed to have any shape.

## INDUSTRIAL APPLICABILITY

In accordance with the above-mentioned present invention, it is possible to uniformly introduce atomized ammonia into the catalyst layer area 1D, early raise a temperature of the catalyst 23 after starting an operation of a cinerator, and control an amount of atomized ammonia in accordance with fluctuation in both an amount of exhaust gas and an amount of NOx. Though the present invention is applied to a system to be used in a cinerator, those skilled in the art can easily understand that the present invention can be applied to any type of furnaces or combustion chambers.

## Claims

**1.** A system to be used in a cinerator for reducing nitrogen oxide, **characterized in that**:

a cylindrical catalyst-reaction tower (1) having both an inlet (1A) through which exhaust gas is introduced thereinto from the cinerator, and an outlet (1 B) through which exhaust gas is exhausted to an exhaust tower, the catalyst-reaction tower (1) being divided inside thereof into a mixture-dispersion area (1 C) situated close to the inlet (1 A), and a catalyst layer area (1 D) situated close to the outlet (1 B);
a discharge unit (2) through which aqueous ammonia is atomized into the catalyst-reaction tower (1), the discharge nozzle being situated in the mixture-dispersion area (1 C) in the vicinity of the inlet (1 A);
at least two area-contractors (21, 22) comprising at least a first area-contractor (21) and a second contractor (22), the area-contractors being located in the mixture-dispersion area (1 C), and spaced away from each other by a predetermined distance axially of the catalyst-reaction tower (1), the area-contractors (21,22) each having at least one opening (21 a, 22a), the opening (21 a) of one (21) of the area-contractors being located in no coincidence with the opening (22a) of the other (22) area-contractor;
a catalyst (23) included in the catalyst layer area (1 D) for facilitating reaction of the aqueous ammonia with nitrogen oxide contained in the exhaust gas;
a duct through which heated gas is introduced into the mixture-dispersion area (1C), the duct being situated between the inlet and the first area-contractor (21);
a dust collector situated upstream of the catalyst-reaction tower (1) for removing dust out of exhaust gas coming from the cinerator;
a dust collecting bypass damper (3) situated upstream of the dust collector for selecting the dust collector or the duct of the catalyst-reaction tower (1) as a path through which exhaust coming from the cinerator flows;
means for switching the dust collector bypass damper (3) to a bypass side, during the catalyst-reaction tower (1) is being pre-heated, to introduce exhaust gas having been used for pre-heating the cinerator into the catalyst-reaction tower (1) through the duct to thereby heat the catalyst (23) up to a temperature at which the catalyst (23) is activated, and switching the dust-collector bypass damper (3) to a main duct side, during normal operation, to introduce exhaust gas coming from the cinerator into the dust collector for dust collection and further into the catalyst-reaction tower (1);
a flow-quantity meter (15) for measuring a flow quantity of the exhaust gas coming from the catalyst-reaction tower (1);
a NOx meter (14) for measuring a density of nitrogen oxide contained in the exhaust gas; and
means (11) for controlling a flow quantity of the aqueous ammonia in accordance with both a difference between a target NOx density and the NOx density measured by the NOx meter (14), and a flow quantity of the exhaust gas measured by the flow-quantity meter (15).

**2.** The system as set forth in claim 1, wherein the discharge nozzle unit (2) includes two fluid-nozzles for compressed air and aqueous ammonia, the aqueous ammonia being supplied through a quantitative pump (11) which can control a quantity of flow of the aqueous ammonia.

**Patentansprüche**

**1.** Ein in einem Verbrennungsofen anzuwendendes System zur Reduzierung von Stickstoffoxid, **dadurch gekennzeichnet, dass**
ein zylindrischer Katalysatorreaktionsschacht (1) vorgesehen ist, mit sowohl einem Einlass (1A), durch den Abgas aus dem Verbrennungsofen zugeführt wird, als auch einem Auslass (1 B), durch den Abgas zu einem Auslassschacht abgeführt wird, wobei das Innere des Katalysatorreaktionsschachts (1) in einen Mischungs-Dispersionsbereich (1C), der in der Nähe des Einlasses (1A) angeordnet ist, und in einen Katalysatorschichtbereich (1D), der in der Nähe des Auslasses (1 B) angeordnet ist, unterteilt ist;
ein Ablasselement (2), durch das wässriges Ammoniak in den Katalysatorreaktionsschacht (1) gesprüht wird, die Ablassdüse in dem Mischungs-Dispersionsbereich (1C) angeordnet ist, der sich in der Nähe des Einlasses (1A) befindet, vorgesehen ist;
zumindest zwei Bereichs-Blenden [area-contractors] (21, 22) vorgesehen sind, welche wenigstens eine erste Bereichs-Blende (21) und eine zweite Blende (22) umfassen, wobei die Bereichs-Blenden im Mischungs-Dispersionsbereich (1C) angeordnet sind, und voneinander durch eine vorgegebene Distanz in der axialen Richtung des Katalysatorreaktionsschachts (1) getrennt angeordnet sind, wobei die Bereichs-Blenden (21,22) jeweils zumindest eine Öffnung (21a, 22a) aufweisen, wobei die Öffnung (21a) einer (21) der Bereichs-Blenden nicht zusammenfallend mit der Öffnung (22a) der anderen Bereichs-Blende angeordnet ist;
ein Katalysator (23) im Katalysatorschichtbereich (1 D) zum Erleichtern der Reaktion von im Abgas enthaltenem Stickstoffoxid mit wässrigem Ammoniak, enthalten ist;
eine Leitung, durch welche erhitztes Gas in den Mischungsdispersionsbereich (1C) geführt wird, zwischen dem Einlass und der ersten Bereichs-Blende (21) angeordnet ist;
ein Staubabscheider zur Entfernung von Staub aus dem Abgas des Verbrennungsofens flussaufwärts in Bezug auf den Katalysatorreaktionsschacht (1) angeordnet ist;
ein Staubabscheider-Bypass-Dämpfer (3) vorgesehen ist, zum Auswählen des Staubabscheiders oder der Leitung des Katalysatorreaktionsschachts (1) als Weg, über den aus dem Verbrennungsofen kommendes Abgas strömt, wobei der Staubabscheider-Bypass-Dämpfer (3) flussaufwärts in Bezug auf den Staubabscheider angeordnet ist;
Mittel zum Umschalten des Staubabscheider-Bypass-Dämpfers (3) auf eine Bypassseite vorgesehen sind, während der Katalysatorreaktionsschacht (1) vorgeheizt wird, um Abgas, das zur Vorheizung des Verbrennungsofens verwendet wurde, in den Katalysatorreaktionsschacht (1) durch die Leitung zugeführt wird, um den Katalysator (23) bis zu derjenigen Temperatur zu erwärmen, bei welcher der Katalysator (23) aktiviert wird, und zum Umschalten des Staubabscheider-Bypass-Dämpfers (3) auf eine Hauptleitungsseite, während des Normalbetriebs, um Abgas, welches aus dem Verbrennungsofen kommt, in den Staubabscheider zur Staubabscheidung und weiter in den Katalysatorreaktionsschacht (1) zu leiten;
ein Durchflussmesser (15) die Durchflussmenge des Abgases aus dem Katalysatorreaktionsschacht (1) misst;
ein NOx-Messer (14) die Konzentration des im Abgas enthaltenen Stickstoffoxids misst; und
Mittel (11) vorgesehen sind, welche eine Flussmenge des wässrigen Ammoniaks gemäß einem Unterschied zwischen einer Ziel-NOx-Konzentration und der vom NOx-Messer (14) gemessenen NOx-Konzentration sowie gemäß der vom Durchflussmesser (15) gemessenen Flussmenge des Abgases regeln.

**2.** Das System nach Anspruch 1, wobei das Ablassdüsen-Element (2) zwei Fluiddüsen für Pressluft und wässriges Ammoniak aufweist, und das wässrige Ammoniak durch eine quantitative Pumpe (11) gefördert wird, die die Flussmenge des wässrigen Ammoniaks steuern kann.

## Revendications

**1.** Système à utiliser dans un incinérateur permettant de réduire l'oxyde d'azote, **caractérisé en ce que** :

une tour de réaction à catalyseur cylindrique (1) comportant à la fois une admission (1A) à travers laquelle le gaz d'échappement est introduit depuis l'incinérateur, et un refoulement (1B) à travers lequel le gaz d'échappement s'échappe vers une tour d'échappement, l'intérieur de la tour de réaction à catalyseur (1) étant divisé en une zone de dispersion de mélange (1C) située près de l'admission (1A), et une zone de couche de catalyseur (1D) située près du refoulement (1B) ;
une unité d'évacuation (2) à travers laquelle de l'ammoniaque aqueuse est atomisée dans la tour de réaction à catalyseur (1), la buse d'évacuation étant située dans la zone de dispersion de mélange (1C) à proximité de l'admission (1A) ;
au moins deux contracteurs de zone (21, 22) comprenant au moins un premier contracteur de zone (21) et un second contracteur de zone (22), les contracteurs de zone étant situés dans la zone de dispersion de mélange (1C), et espacés l'un de l'autre d'une distance prédéterminée de façon axiale de la tour de réaction à catalyseur (1), les contracteurs de zone (21, 22) comportant chacun, au moins une ouverture (21a, 22a), l'ouverture (21a) de l'un (21) des contracteurs de zone étant située sans coïncidence avec l'ouverture (22a) de l'autre contracteur de zone (22) ;
un catalyseur (23) compris dans la zone de couche de catalyseur (1D) permettant de faciliter la réaction de l'ammoniaque aqueuse avec l'oxyde d'azote contenu dans le gaz d'échappement ;
un conduit à travers lequel un gaz chauffé est introduit dans la zone de dispersion de mélange (1C), le conduit étant situé entre l'admission et le premier contracteur de zone (21) ;
un collecteur de poussière situé en amont de la tour de réaction à catalyseur (1) permettant d'éliminer la poussière du gaz d'échappement provenant de l'incinérateur ;
un registre de dérivation de collecte de poussière (3) situé en amont du collecteur de poussière permettant de choisir le collecteur de poussière ou le conduit de la tour de réaction à catalyseur (1) comme trajet à travers lequel circule l'échappement provenant de l'incinérateur ;
un moyen permettant de faire passer le registre de dérivation de collecteur de poussière (3) vers un côté de dérivation, pendant que la tour de réaction à catalyseur (1) est préchauffée, afin d'introduire le gaz d'échappement ayant été utilisé pour préchauffer l'incinérateur dans la tour de réaction à catalyseur (1) à travers le conduit pour chauffer ainsi le catalyseur (23) à une température à laquelle le catalyseur (23) est activé, et pour faire passer le registre de dérivation de collecteur de poussière (3)
vers un côté de conduit principal, pendant le fonctionnement normal, afin d'introduire le gaz d'échappement provenant de l'incinérateur dans le collecteur de poussière pour la collecte de poussière et en outre dans la tour de réaction à catalyseur (1) ;
un débitmètre (15) permettant de mesurer une quantité de débit du gaz d'échappement provenant de la tour de réaction à catalyseur (1) ;
un compteur de NOx (14) permettant de mesurer une masse volumique de l'oxyde d'azote contenu dans le gaz d'échappement ; et

un moyen (11) permettant de réguler une quantité de débit de l'ammoniaque aqueuse en conformité avec à la fois une différence entre une masse volumique de NOx cible et la masse volumique de NOx mesurée par le compteur de NOx (14), et une quantité de débit du gaz d'échappement mesurée par le débitmètre (15).

**2.** Système selon la revendication 1, dans lequel l'unité de buse d'évacuation (2) comprend deux buses à fluide pour l'air comprimé et l'ammoniaque aqueuse, l'ammoniaque aqueuse étant alimentée par l'intermédiaire d'une pompe doseuse (11) qui peut réguler une quantité de débit de l'ammoniaque aqueuse.

FIG. 1

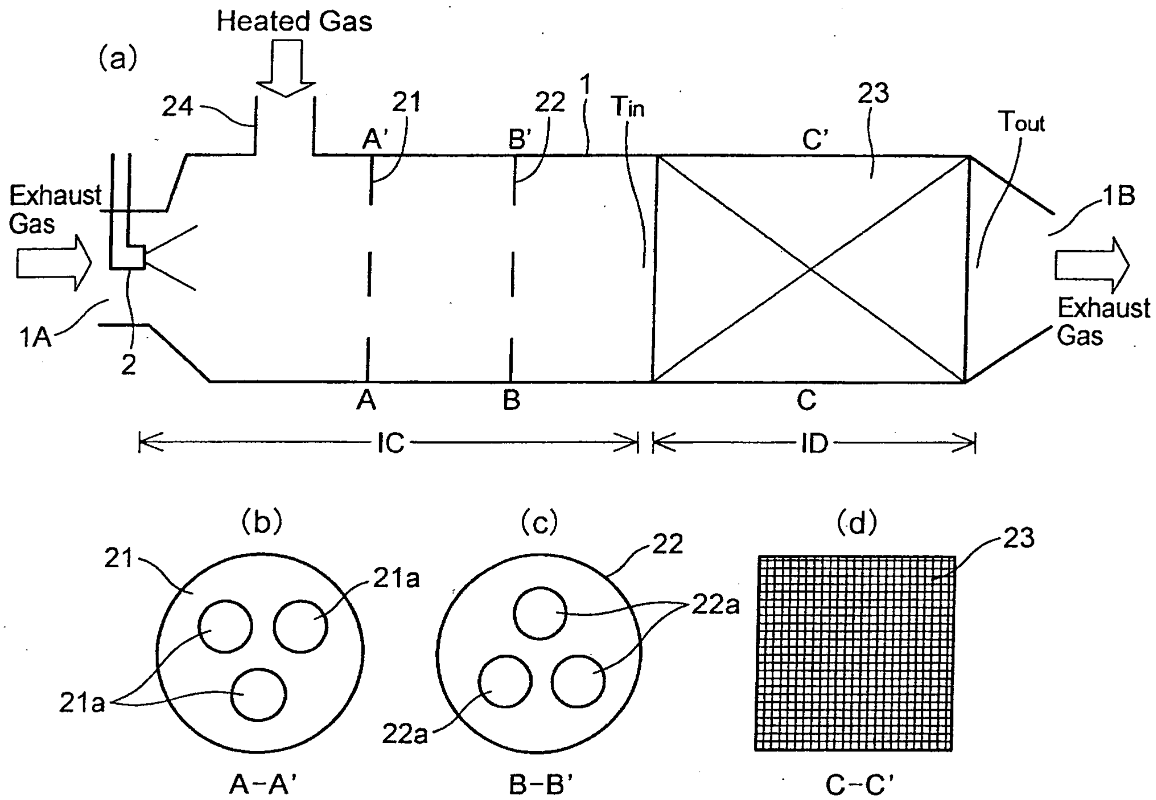
(a)
Heated Gas
24
21
22
1
A'
B'
Tin
23
C'
Tout
Exhaust Gas
1B
Exhaust Gas
1A
2
A
B
C
IC
ID
(b)
(c)
(d)
21
21a
21a
22
22a
22a
23
A-A'
B-B'
C-C'

FIG. 2

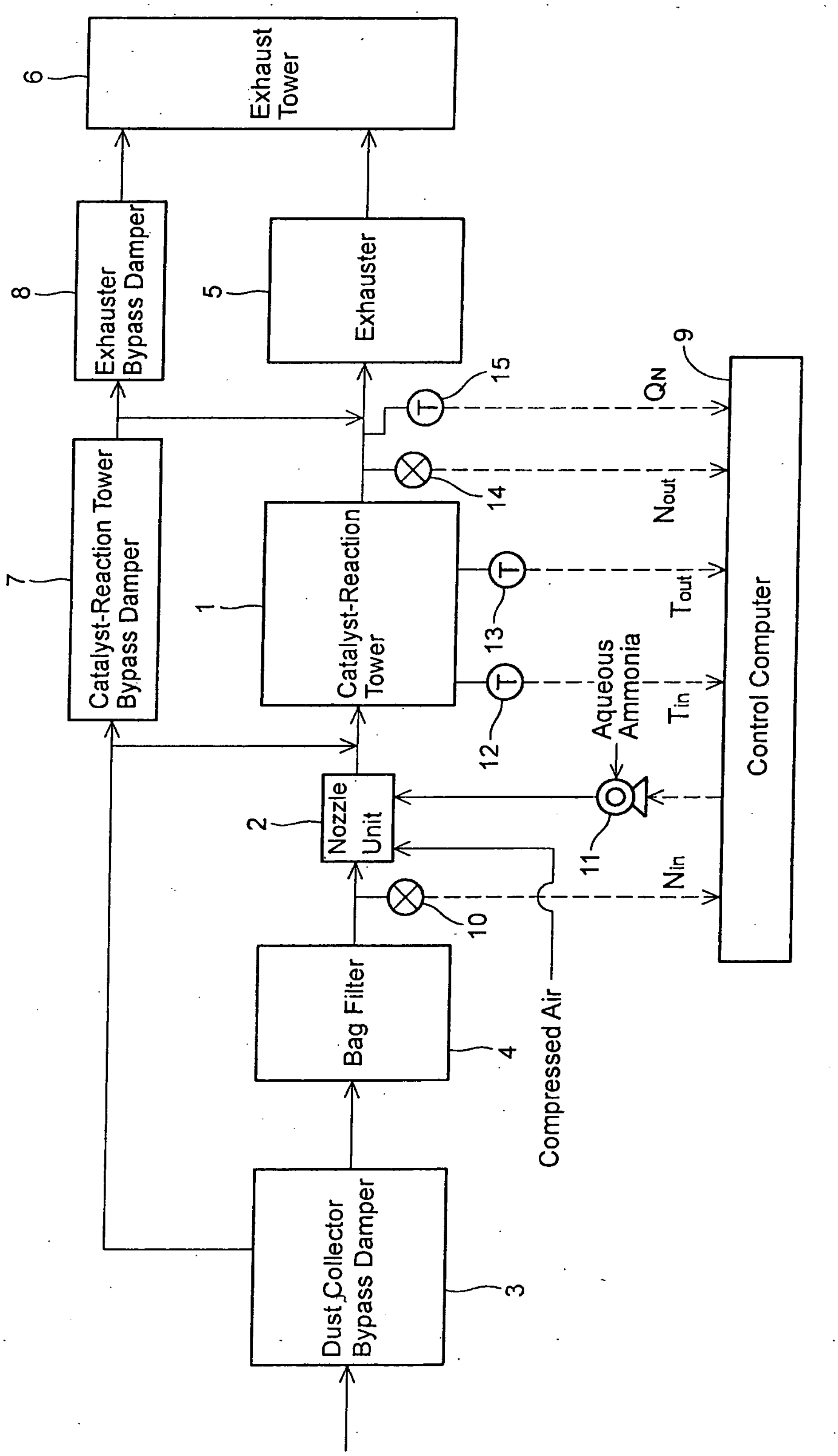
Exhaust Tower
6
Exhauster Bypass Damper
8
Exhauster
5
Catalyst-Reaction Tower Bypass Damper
7
Catalyst-Reaction Tower
1
Nozzle Unit
2
Bag Filter
4
Dust Collector Bypass Damper
3
Control Computer
9
15
14
13
12
11
10
$Q_N$
$N_{out}$
$T_{out}$
$T_{in}$
$N_{in}$
Aqueous Ammonia
Compressed Air

FIG. 3

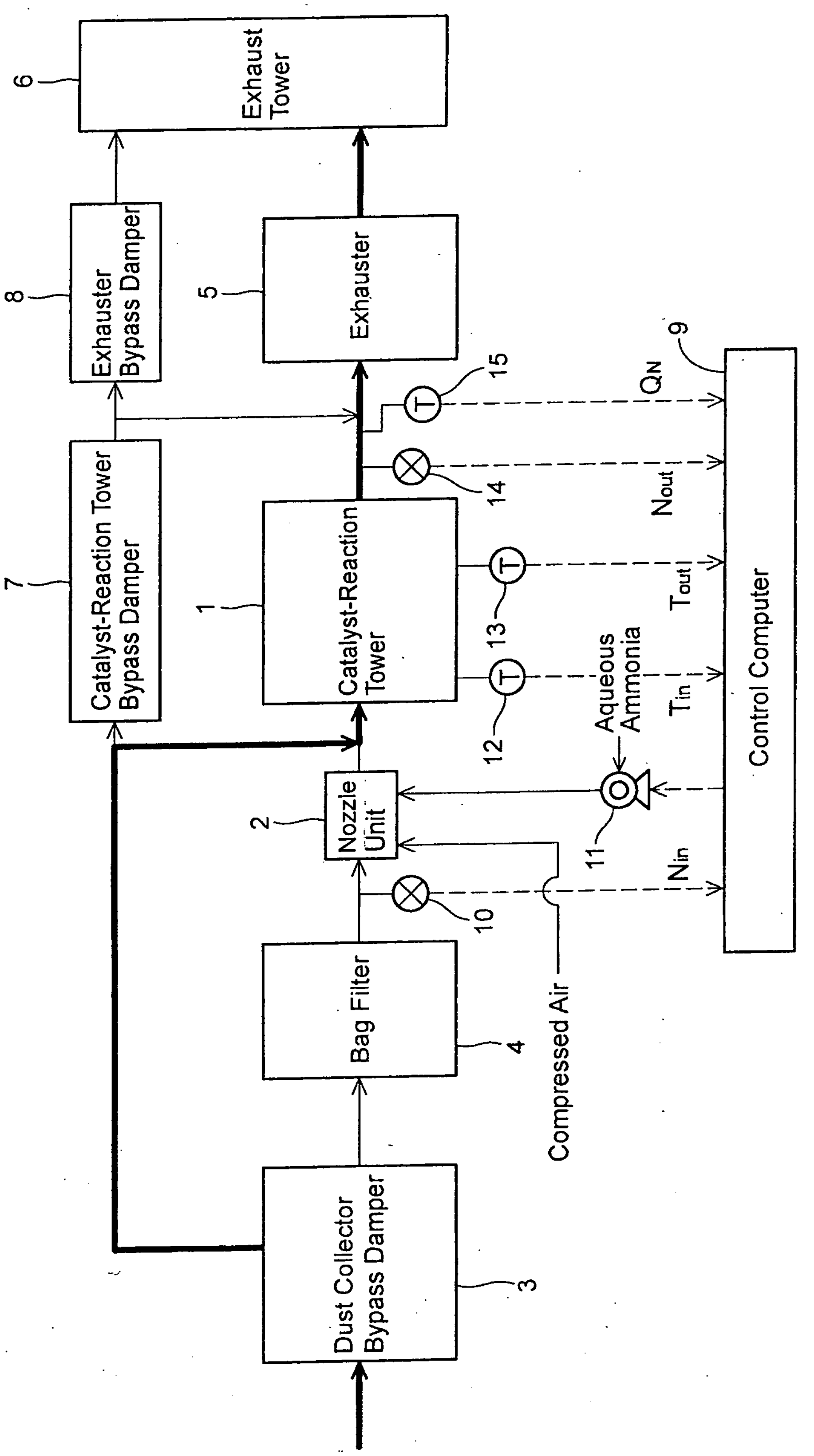
Exhaust Tower
6
Exhauster Bypass Damper
8
Exhauster
5
Catalyst-Reaction Tower Bypass Damper
7
Catalyst-Reaction Tower
1
Nozzle Unit
2
Bag Filter
4
Dust Collector Bypass Damper
3
Control Computer
9
Aqueous Ammonia
Compressed Air
T
10
11
12
13
14
15
$Q_N$
$N_{out}$
$T_{out}$
$T_{in}$
$N_{in}$

FIG. 4

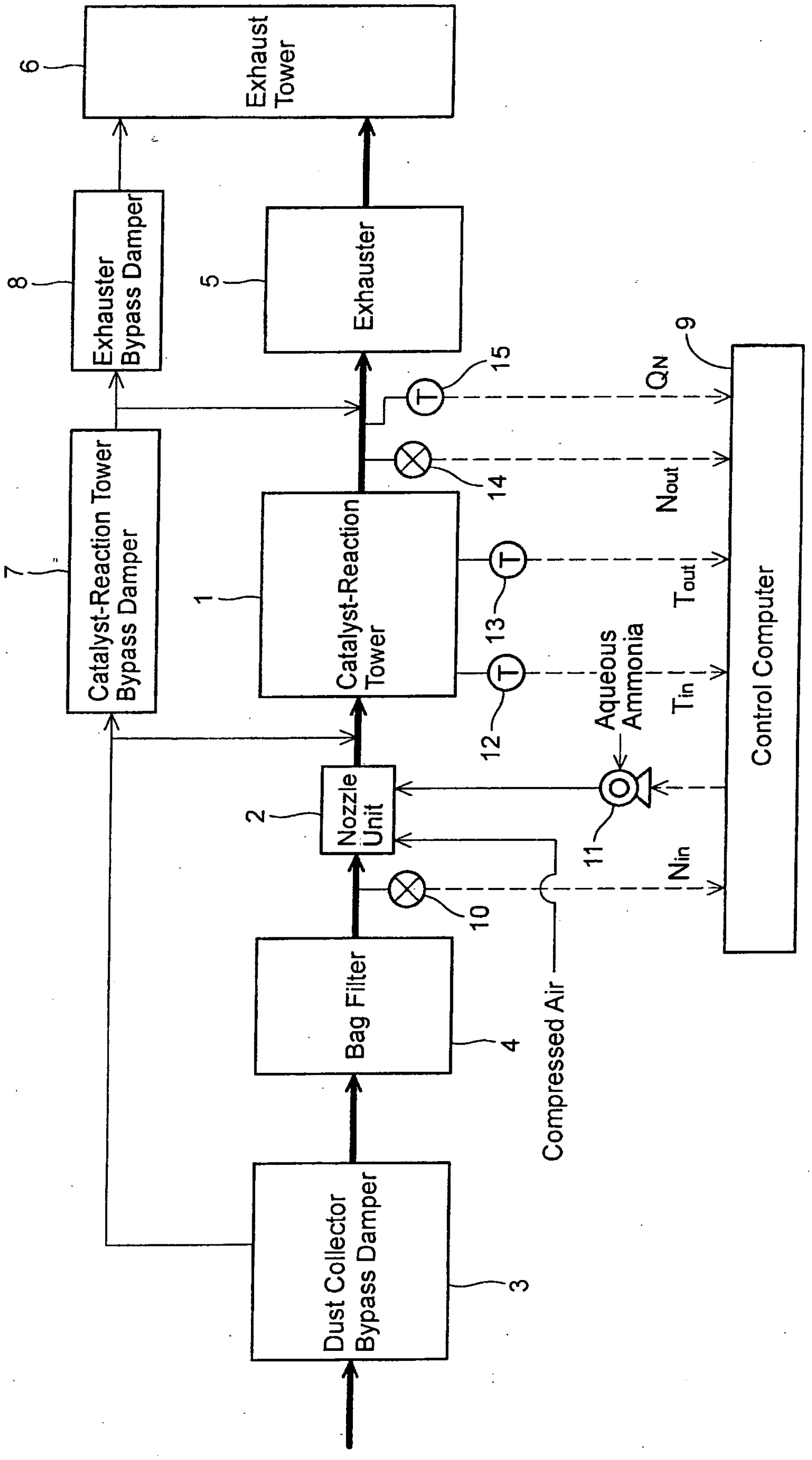

Exhaust Tower
6
Exhauster Bypass Damper
8
Exhauster
5
Catalyst-Reaction Tower Bypass Damper
7
Catalyst-Reaction Tower
1
Nozzle Unit
2
Bag Filter
4
Dust Collector Bypass Damper
3
Control Computer
9
$Q_N$
15
14
$N_{out}$
$T_{out}$
13
$T_{in}$
12
Aqueous Ammonia
11
$N_{in}$
10
Compressed Air
T
T
T

FIG. 5

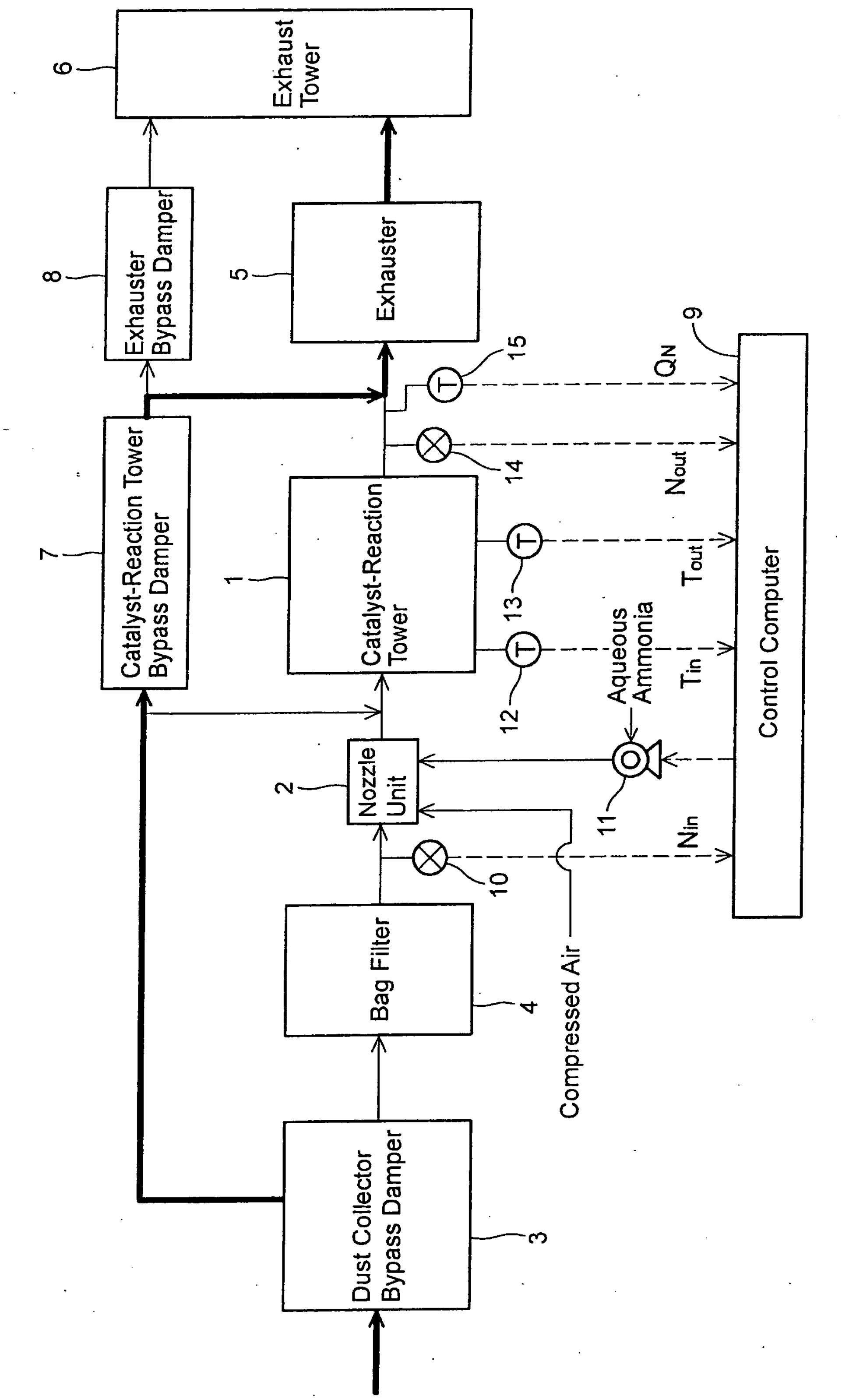
Exhaust Tower
6
Exhauster Bypass Damper
8
Exhauster
5
Catalyst-Reaction Tower Bypass Damper
7
Catalyst-Reaction Tower
1
15
14
13
12
QN
Nout
Tout
Tin
9
Control Computer
Aqueous Ammonia
Nozzle Unit
2
11
10
Nin
Bag Filter
4
Compressed Air
Dust Collector Bypass Damper
3

FIG. 6

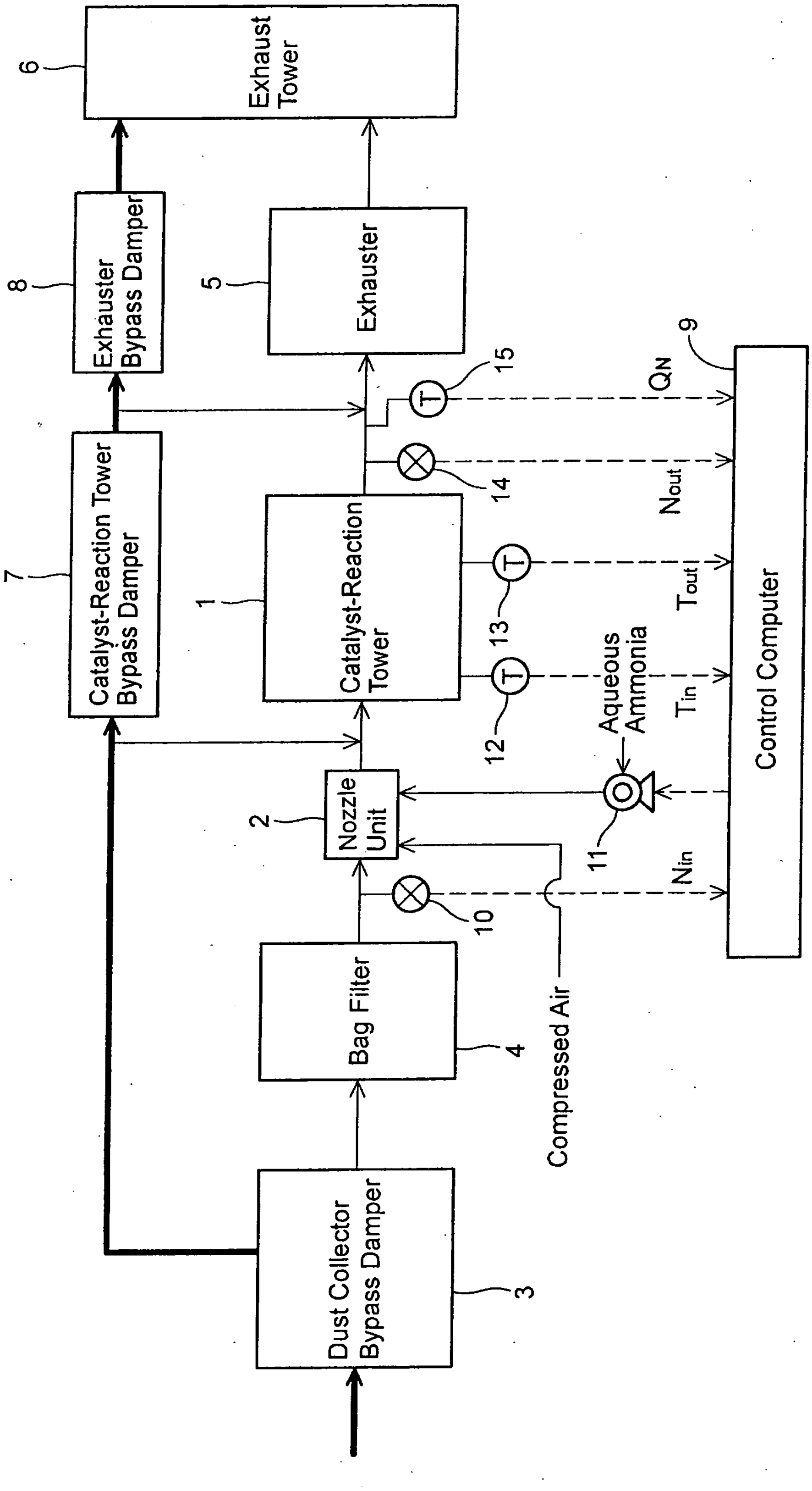

Exhaust Tower
6
Exhauster Bypass Damper
8
Exhauster
5
Catalyst-Reaction Tower Bypass Damper
7
Catalyst-Reaction Tower
1
Nozzle Unit
2
Bag Filter
4
Dust Collector Bypass Damper
3
Control Computer
9
Compressed Air
Aqueous Ammonia
T
T
T
10
11
12
13
14
15
$Q_N$
$N_{out}$
$T_{out}$
$T_{in}$
$N_{in}$

FIG. 7

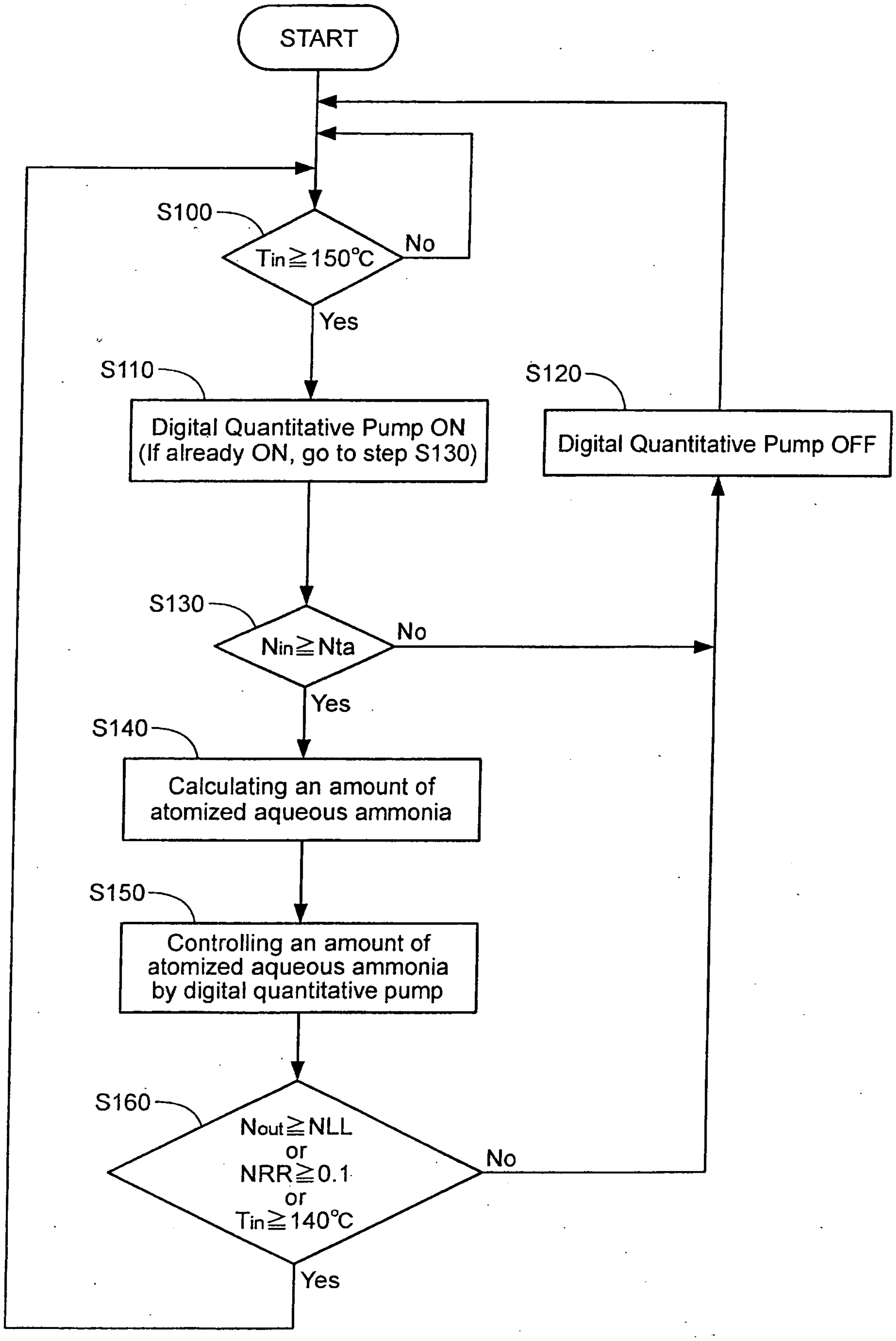
START
S100
Tin≧150℃
No
Yes
S110
Digital Quantitative Pump ON
(If already ON, go to step S130)
S120
Digital Quantitative Pump OFF
S130
Nin≧Nta
No
Yes
S140
Calculating an amount of
atomized aqueous ammonia
S150
Controlling an amount of
atomized aqueous ammonia
by digital quantitative pump
S160
Nout≧NLL
or
NRR≧0.1
or
Tin≧140℃
No
Yes

FIG. 8

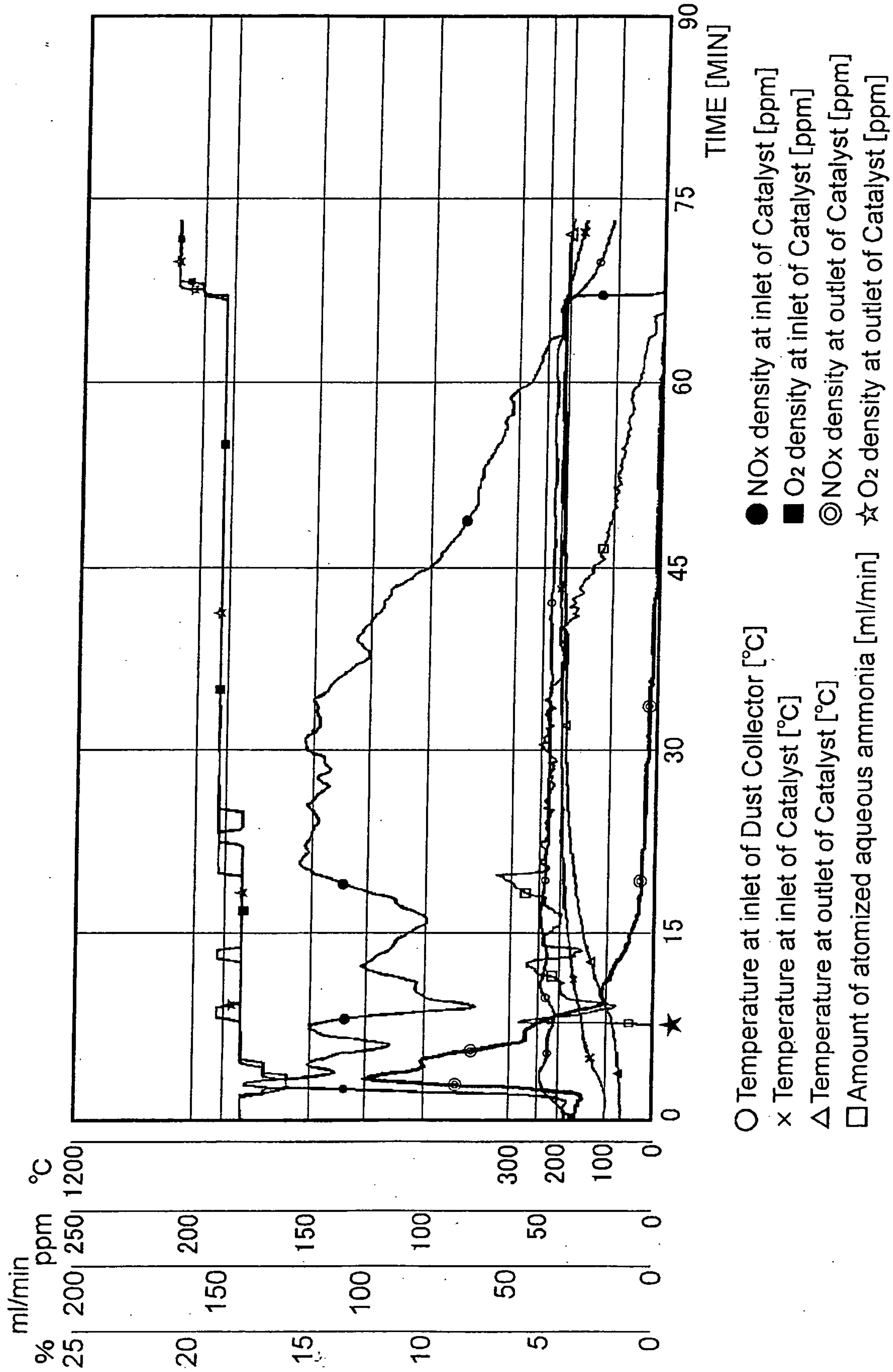
% 25 20 15 10 5 0
ml/min 200 150 100 50 0
ppm 250 200 150 100 50 0
°C 1200 300 200 100 0
0 15 30 45 60 75 90
TIME [MIN]
○ Temperature at inlet of Dust Collector [°C]
× Temperature at inlet of Catalyst [°C]
△ Temperature at outlet of Catalyst [°C]
□ Amount of atomized aqueous ammonia [ml/min]
● NOx density at inlet of Catalyst [ppm]
■ O2 density at inlet of Catalyst [ppm]
◎ NOx density at outlet of Catalyst [ppm]
☆ O2 density at outlet of Catalyst [ppm]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001017045 A